# EUROPÄISCHE PATENTSCHRIFT

(11) **EP 0 536 472 B1**
(45) Veröffentlichungstag und Bekanntmachung des Hinweises auf die Patenterteilung: **20.12.1995**
(21) Anmeldenummer: 92109000.7
(22) Anmeldetag: 28.05.1992
(51) Int. Cl.: B23K 3/00

(54) **Verfahren zum Löten und Lötkolben zur Durchführung dieses Verfahrens**
Soldering method and soldering iron to be used therewith
Procédé de soudage tendre et fer à souder pour tel procédé

(30) Priorität: 11.10.1991 DE 4133645
(43) Veröffentlichungstag der Anmeldung: 14.04.1993
(73) Patentinhaber: Hohnerlein, Ernst, D-97892 Kreuzwertheim (DE)
(72) Erfinder: Hohnerlein, Ernst, D-97892 Kreuzwertheim (DE)
(74) Vertreter: Schieferdecker, Lutz, Dipl.-Ing.

(56) Entgegenhaltungen:
- EP-A- 0 219 374
- DE-A- 2 134 948
- DE-A- 2 236 699
- DE-A- 2 440 005
- DE-C- 3 638 975

## Beschreibung

Die Erfindung bezieht sich auf einen Lötkolben, insbesondere zum Löten, Reparieren oder Entlöten von Bauteilen auf elektrischen Leiterplatten, mit einem Halte- und Trageelement und mit einer von einer elektrischen Heizeinrichtung beheizbaren Lötkolbenspitze sowie mit einer die Heizeinrichtung und die Lötkolbenspitze zumindest teilweise umgebenden, im Bereich der Lötkolbenspitze offenen, an eine Schutzgasleitung anschließbaren Kammer für ein insbesondere mit einem sauerstoffreduzierenden Aktivator angereichertes Schutzgas.

Ein solcher Lötkolben ist bereits bekannt (DE-A-21 34 948). Als Schutzgas wird wie üblich Stickstoff verwendet, der die Lötkolbenspitze umspült und die Lötstelle beaufschlagt, so daß die Umgebungsluft ferngehalten wird und es nicht zu einem Oxidieren des als Lot verwendeten aufgeschmolzenen Lötzinns kommt. Dementsprechend kann ohne Anwendung eines Flußmittels gearbeitet werden.

Ein weiterer mit dem bekannten Lötkolben bereits genutzter Vorteil liegt darin, daß die Heizeinrichtung nicht nur zur Erwärmung der Lötkolbenspitze sondern auch zur Erwärmung des Schutzgases bis auf etwa 200°C dient, so daß die Lötstelle und das Lot nicht bzw. nicht nur durch Wärmekontakt mit der Lötspitze erwärmt werden müssen sondern durch Anblasen mit dem heißen Schutzgas auf die erforderliche Temperatur gebracht oder zumindest vorgewärmt werden können. Dabei ist eine individuelle Temperatureinwirkung auf die Lötstelle durch Variierung des Abstands der Lötkolbenspitze bzw. der Austrittsöffnung für das Schutzgas zur Lötstelle möglich. Auf diese Weise wird auch bereits am Ende des Lötvorgangs einem zu schnellen Erstarren des Lotes entgegengewirkt, so daß das Lot gleichmäßig und unter Abbau von Spannungen abkühlt, was zu einer feinkristallinen Struktur des Lotes führt und die Lötqualität verbessert.

Wie allgemein üblich ist auch beim bekannten Lötkolben eine Lötspitze vorgesehen, die sich zum freien Ende hin verjüngt und eine leicht abgeflacht oder gerundet mit einer glatten Oberfläche ausläuft. Hier setzt die Erfindung an, der die Erkenntnis zugrunde liegt, daß sich Gebrauchsvorteile erzielen lassen, wenn das freie Ende der Lötkolbenspitze nicht mit glatter Oberfläche ausgeführt wird.

Der Erfindung liegt die Aufgabe zugrunde, einen Lötkolben zu schaffen, mit dem sich der Lötvorgang insgesamt einfacher gestalten und der Lotverbrauch optimieren läßt.

Diese Aufgabe wird erfindungsgemäß dadurch gelöst, daß bei einem Lötkolben der eingangs beschriebenen Art die Lötkolbenspitze an ihrem freien Ende eine Ausnehmung zur Aufnahme von Lot aufweist.

Diese Ausnehmung kann bei einer zweckmäßigen Ausführung schlitzförmig sein. Ferner ist eine Ausführung vorteilhaft, bei welcher der Abstand der Wände der Ausnehmung derart eng bemessen ist, daß ein Kapillareffekt auf das flüssige Lot wirkt.

Die Erfindung betrifft ferner das Arbeiten mit dem erfindungsgemäßen Lötkolben zur Nutzung der durch die Ausnehmung geschaffenen Möglichkeiten oder Vorteile. Demgemäß ist ein erfindungsgemäßes Lötverfahren vorgesehen, bei dem Lot innerhalb der Ausnehmung deponiert und mit dem Lötkolben zur Lötstelle transportiert wird.

In Umkehrung dazu ist auch ein erfindungsgemäßes Entlötverfahren vorgesehen, bei dem zu entfernendes Lot verflüssigt, mittels Kapillarwirkung in die Ausnehmung eingesaugt und in der Ausnehmung mit dem Lötkolben abtransportiert wird.

In Übereinstimmung mit diesen Verfahren liegt der Vorteil des erfindungsgemäßen Lötkolbens in der Funktion der Ausnehmung an der Lötkolbenspitze als Depot für Lot, das sich ohne weitere Zusatzmaßnahmen mittels des Lötkolbens selbst manipulieren und transportieren läßt, wobei im Falle einer kapillarkraftwirksamen Ausnehmung auch ein Absaugen von flüssigem Überschußlot eingeschlossen ist.

Ein Ausführungsbeispiel des erfindungsgemäßen Lötkolbens wird nachfolgend anhand einer schematischen Zeichnung erläutert. Darin zeigen:
- Figur 1: eine Prinzipdarstellung des Lötkolbens und der Versorgungseinrichtung für Schutzgas, ohne daß Einzelheiten der Lötspitzenausbildung gezeigt sind; und
- Figur 2: einen Längsschnitt durch die Lötspitze und den angrenzenden Teil eines Lötkolbens in größerem Maßstab.

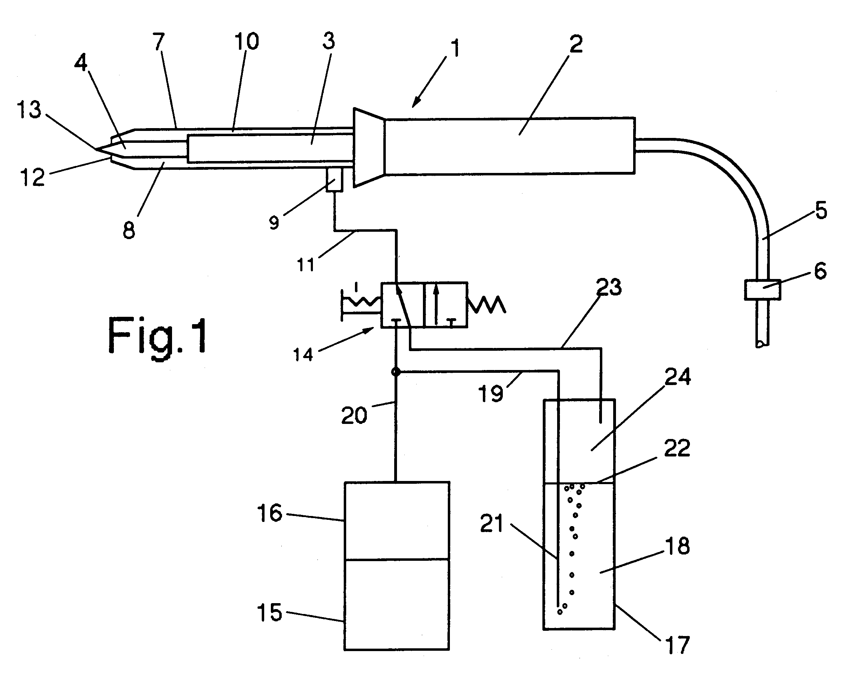

Ein Lötkolben 1 gemäß Fig. 1 umfaßt ein Halte- und Trageelement 2, eine Heizeinrichtung 3 und eine Lötkolbenspitze 4. Mit Lötkolbenspitze 4 ist hierbei das gesamte Endstück gemeint. Das Halte- und Trageelement 2 kann der Griff eines Handlötkolbens sein oder es ist in nicht näher dargestellter Weise an die Verwendung in einem Handhabungsgerät, an einem Roboter bzw. an einem Manipulator angepaßt.

Die Heizeinrichtung 3 ist ein elektrisches Heizelement bzw. ein elektrischer Heizkörper und kann z.B. ein Keramikheizkörper sein, der über Leitungen 5 mit elektrischem Strom versorgt wird. Eine Steuer- und Regelungseinrichtung 6 dient zusammen mit hier nicht näher interessierenden, grundsätzlich bekannten Bauteilen einer elektrischen Schaltung zur Steuerung der Stromversorgung der Heizeinrichtung 3 und somit zur Steuerung der Temperatur der Lötkolbenspitze 4.

Wie die schematische Darstellung in Fig. 1 ferner zeigt, ist ein hülsenförmiger Körper 7 der Heizeinrichtung 3 und der Lötkolbenspitze 4 zugeordnet und bildet eine Kammer 8. Der hülsenförmige Körper 7 umgibt die Heizeinrichtung 3 und die Lötkolbenspitze 4 zumindest teilweise sowie mit Abstand und dient zur Führung von Schutzgas. Ein Anschlußelement 9 am hülsenförmigen Körper 7 verbindet die Kammer 8, die eine Ringkammer 10 zwischen dem hülsenförmigen Körper 7 einerseits und der Heizeinrichtung 3 und der Lötkolbenspitze 4 andererseits ist, mit einer Schutzgasleitung 11. Das Anschlußelement 9 ist im wesentlichen am einen, der Lötkolbenspitze 4 abgewandten Ende des hülsenförmigen Körpers 7 angeordnet. Sein zweites, freies Ende dient als Austrittsöffnung 12 für das Schutzgas im Bereich der Lötkolbenspitze 4. Zweckmäßigerweise steht die Lötkolbenspitze 4 mit ihrem freien Ende 13 etwas über die ringförmige Austrittsöffnung 12 vor.

Die Schutzgasleitung 11 kann ein Schlauch sein, der unter Zwischenschaltung eines Steuerventiles 14 zu einer Schutzgas-Versorgungseinrichtung z.B. in Gestalt eines Vorratsbehälters 15 und einer Pumpe 16 oder dgl. führt. Ferner kann ein Behälter 17 mit einem Aktivator 18 in Gestalt einer Karbonsäure wie z.B. Essigsäure oder Ameisensäure vorgesehen sein und über eine Nebenleitung 19 mit dem vom Steuerventil 14 zur Pumpe 16 führenden Leitungsstück 20 verbunden sein. Das freie Ende 21 der Nebenleitung 19 endet im Behälter 17 unterhalb der Oberfläche bzw. des Flüssigkeitsspiegels 22 der Karbonsäure 18, so daß durch die Nebenleitung 19 strömendes Schutzgas auch die Karbonsäure 18 durchströmt bzw. durch diese hindurchperlt und sich mit Aktivator anreichert.

Eine weitere Nebenleitung 23 führt von dem Gasraum 24 des Behälters 17 zum Steuerventil 14. Durch entsprechende Stellung des Steuerventiles 14 kann das Schutzgas entweder unmittelbar von der Pumpe 16 zum Lötkolben 1 strömen oder es durchströmt zunächst den Behälter 17 und die dort befindliche Karbonsäure 18, wobei eine Anreicherung mit Karbonsäure 18 erfolgt.

Durch das Beimischen von gasförmigen Aktivatoren aus der Karbonsäure 18 im Behälter 17 ist es möglich, das Lot jederzeit zu aktivieren, wobei dies auch für die Lötpartner an einer Lötstelle gilt.

Der hülsenförmige Körper 7 des Lötkolbens 1 ist ein Führungsmantel für das Schutzgas und dient dazu, daß das Schutzgas von dem Anschlußelement 9 längs des Heizkörpers 3 zur Lötkolbenspitze 4 strömt und dort die Lötkolbenspitze 4 vollständig umströmt, ehe es durch die Austrittsöffnung 12 ins Freie gelangt. Hierdurch ist sichergestellt, daß an der Lötkolbenspitze 4 bzw. an der Lötstelle befindliches, schmelzflüssiges Lot, auf das die Austrittsöffnung 12 gerichtet ist, nicht oxidieren kann.

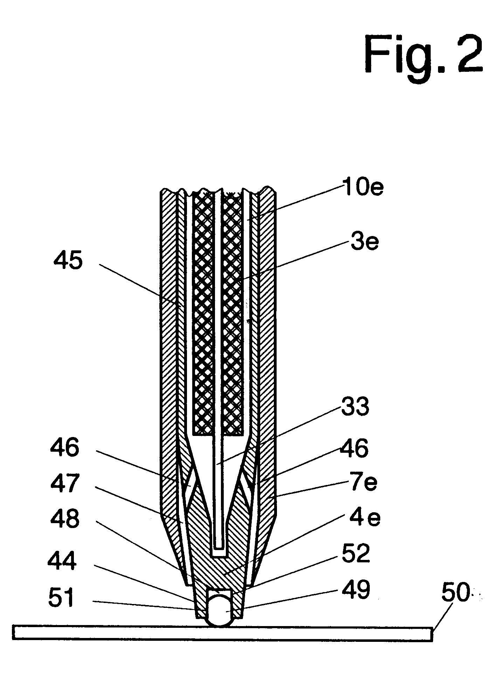

Der Lötkolben gemäß Fig. 2 weist wiederum eine Heizeinrichtung 3e und eine Lötkolbenspitze 4e sowie eine Ringkammer 10e für Schutzgas auf, das mit einem Aktivator zum Desoxidieren versehen sein kann. Die Ringkammer 10e befindet sich in einem hülsenförmigen Körper 7e, der kurz vor dem freien Ende 44 der Lötkolbenspitze 4e endet.

Von der Lötkolbenspitze 4e erstreckt sich ein rohrförmiges Teil 45 in die Ringkammer 10e und liegt dort innen am hülsenförmigen Körper 7e an. Querbohrungen 46 erstrecken sich durch den mit der Lötkolbenspitze 4e verbundenen, rohrförmigen Teil 45, so daß das Schutzgas aus der Ringkammer 10e zwischen Heizeinrichtung 3e und rohrförmigem Teil 45 in eine die Lötkolbenspitze 4e weitgehend umgebende, zweite Ringkammer 47e strömen und sodann austreten kann. Hierbei umströmt das Schutzgas das freie Ende 44 der Lötkolbenspitze 4e.

Mindestens ein Temperaturfühler 33 erstreckt sich mit seinem freien Ende bis in die Lötkolbenspitze 4e und erlaubt es, die Temperatur der Lötkolbenspitze 4e und/oder des Schutzgases zu ermitteln und aufgrund dieser Temperaturen sodann die Heizeinrichtung 3e zu steuern.

Die Lötkolbenspitze 4e weist schließlich an ihrem freien Ende 44 eine Ausnehmung 48 auf. Sie dient zur Aufnahme von Lot 49, mit dem auf der Leiterplatte 50 gearbeitet wird.

Die Ausnehmung 48 kann eine Kammer oder eine Vertiefung sein. Vorzugsweise ist die Ausnehmung 48 jedoch schlitzförmig und dient aufgrund ihrer Kapillarwirkung für das flüssige Lot 49 als Lotkammer bzw. als Lotdepot. Zur Erzielung der Kapillarwirkung ist der Abstand der Wände 51 und 52 der Ausnehmung 48 derart bemessen, daß ein Kapillareffekt für das flüssige, zu verwendende Lot 49 eintritt.

Beim Arbeiten mit einer Lötkolbenspitze 4e, die eine Ausnehmung 48 bzw. eine als Lotdepot dienende Lotkammer aufweist, kann das Aufschmelzen einer bereits vorhandenen Lötstelle unmittelbar mit dem heißflüssigen Lot 49e erfolgen, wobei das freie Ende 44 der Lötkolbenspitze 4e und die Lötstelle von Schutzgas umströmt werden, das ferner vorzugsweise mit einem Aktivator (zum Beispiel Ameisensäure HCOOH) angereichert ist.

Mit Hilfe des heißen Schutzgases ist eine berührungslose Temperaturzuführung zur Lötstelle möglich, wobei dies bis in Temperaturbereiche von 200 bis 300°C zweckmäßig sein kann.

Die Verwendung eines Lötkolbens mit einer zusätzlich am freien Ende 44 der Lötkolbenspitze 4e vorgesehenen Ausnehmung führt dazu, daß auch komplizierte Reparaturen vorgenommen werden können, wie zum Beispiel die Entfernung von Brücken. Durch die Kapillarwirkung der Ausnehmung 48 fließt nämlich das Lot aufgrund von Adhäsionskräften ohne Erzeugung eines Vakuums oder dergleichen selbsttätig in die Ausnehmung 48.

Mannigfache Abwandlungen hinsichtlich der Form der Lötkolbenspitze sind möglich, ohne von dem grundsätzlichen Erfindungsgedanken abzuweichen. Gemeinsam ist in allen Fällen, daß das auf der Lötkolbenspitze 4 befindliche Lot durch den mit Aktivator angereicherten Schutzgasstrom ständig oxidfrei gehalten wird. Dieses Lot bildet ein Lötdepot, das unmittelbar zum Arbeiten an einer oder an mehreren Lötstellen verwendet werden kann. Die bisher zum Oxidfreihalten und zum Desoxidieren (Oxidfrei-machen) der Lötstelle benötigte Zeit entfällt, so daß man nicht nur eine qualitativ hochwertige Lötstelle erhält, sondern auch ein wesentlich rascheres Arbeiten möglich ist.

## Patentansprüche

1. Lötkolben, insbesondere zum Löten, Reparieren oder Entlöten von Bauteilen auf elektrischen Leiterplatten (50), mit einem Halte- und Trageelement (3) und mit einer von einer elektrischen Heizeinrichtung (3) beheizbaren Lötkolbenspitze (4) sowie mit einer die Heizeinrichtung (3) und die Lötkolbenspitze (4) zumindest teilweise umgebenden, im Bereich der Lötkolbenspitze (4) offenen, an eine Schutzgasleitung (11) anschließbaren Kammer (8) für ein insbesondere mit einem sauerstoffreduzierenden Aktivator (18) angereichertes Schutzgas, **dadurch gekennzeichnet,** daß die Lötkolbenspitze (4) an ihrem freien Ende (44) eine Ausnehmung (48) zur Aufnahme von Lot (49) aufweist.

2. Lötkolben nach Anspruch 1, **dadurch gekennzeichnet,** daß die Ausnehmung (48) schlitzförmig ist.

3. Lötkolben nach Anspruch 1 oder 2, **dadurch gekennzeichnet,** daß der Abstand der Wände (51, 52) der Ausnehmung (48) derart eng bemessen ist, daß ein Kapillareffekt auf das flüssige Lot (49) wirkt.

4. Verfahren zum Löten mit einem Lötkolben nach einem der Ansprüche 1 bis 3, **dadurch gekennzeichnet,** daß Lot (49) innerhalb der Ausnehmung (48) deponiert und mit dem Lötkolben (1) zur Lötstelle transportiert wird.

5. Verfahren zum Entlöten mit einem Lötkolben nach Anspruch 3, **dadurch gekennzeichnet,** daß zu entfernendes Lot verflüssigt, mittels Kapillarwirkung in die Ausnehmung (48) eingesaugt und in der Ausnehmung (48) mit dem Lötkolben (1) abtransportiert wird.

## Claims

1. A soldering iron, in particular for soldering, repairing or unsoldering components on electrical printed circuit boards (50), comprising a holding and carrying element (2) and a soldering iron tip (4) heatable by an electrical heating means (3), as well as a chamber (8) for a protective gas which is enriched in particular with an oxygen-reducing activator (18), which chamber at least partially surrounds the heating means (3) and the soldering iron tip (4) and is open in the region of the soldering iron tip (4) and is connectable to a protective gas conduit (11), characterised in that at its free end (44) the soldering iron tip (4) has an opening (48) for receiving solder (49).

2. A soldering iron according to claim 1 characterised in that the opening (48) is in the form of a slot.

3. A soldering iron according to claim 1 or claim 2 characterised in that the spacing of the walls (51, 52) of the opening (48) is so narrow that a capillary effect acts on the liquid solder (49).

4. A method of soldering with a soldering iron according to one of claims 1 to 3 characterised in that solder (49) is deposited within the opening (48) and transported to the soldering location with the soldering iron (1).

5. A method of unsoldering with a soldering iron according to claim 3 characterised in that solder to be removed is liquefied, sucked into the opening (48) by means of capillary action and transported away in the opening (48) with the soldering iron (1).

## Revendications

1. Fer à souder, en particulier pour souder réparer ou dessouder des composants sur des plaquettes électriques de circuits imprimés (50), comprenant un élément de retenue et de support (2) et une pointe de fer à souder (4), chauffante par l'intermédiaire d'un dispositif de chauffage électrique (3), ainsi qu'une enceinte (8) qui entoure, du moins partiellement le dispositif de chauffage (3) et la pointe de fer à souder (4), qui est ouverte dans la zone de la pointe de fer à souder (4) et qui peut être raccordée à une conduite de gaz de protection (11), cette enceinte étant destinée à un gaz de protection enrichi d'un activateur (18) réducteur d'oxygène, caractérisé en ce que la pointe de fer à souder (4) présente, à son extrémité libre (44), un évidement (48) pour la réception de la matière de soudure (49).

2. Fer à souder selon la revendication 1, caractérisé en ce que l'évidement (48) est en forme de fente.

3. Fer à souder selon la revendication 1 ou 2, caractérisé en ce que l'écartement des parois (51, 52) de l'évidement (48) est suffisamment étroit pour qu'un effet de capillarité se fasse sentir sur la matière liquide de soudure (49).

4. Procédé de soudure avec un fer à souder selon l'une des revendications 1 à 3, caractérisé en ce que la matière de soudure (49) se dépose à l'intérieur de l'évidement (48) et est transportée par le fer à souder (1) au point de soudure.

5. Procédé pour désouder avec un fer à souder selon la revendication 3, caractérisé en ce que la matière de soudure à éliminer est liquéfiée est aspirée par capillarité dans l'évidement (48) et, dans l'évidement (48), est emmenée par le fer à souder (1).
